# EUROPÄISCHE PATENTSCHRIFT

(11) **EP 2 328 047 B1**
(45) Veröffentlichungstag und Bekanntmachung des Hinweises auf die Patenterteilung: **14.06.2017**
(21) Anmeldenummer: 10014944.2
(22) Anmeldetag: 24.11.2010
(51) Int. Cl.: G05B 19/042, A47B 88/457

(54) **Möbel und Vorrichtung zur Betriebskontrolle eines Möbelteils**
Furniture and device for monitoring the operation of a piece of furniture
Meuble et dispositif destiné à contrôler le fonctionnement d'une pièce de meuble

(30) Priorität: 27.11.2009 DE 202009016101 U
(43) Veröffentlichungstag der Anmeldung: 01.06.2011
(73) Patentinhaber: Grass GmbH, 6973 Höchst (AT)
(72) Erfinder: Liebsch, Ronald, 88239 Wangen (DE)
(74) Vertreter: Otten, Roth, Dobler & Partner mbB Patentanwälte

(56) Entgegenhaltungen:
- EP-A1- 1 500 955
- EP-A1- 2 098 672
- WO-A1-2005/079630
- WO-A1-2008/026954
- DE-A1- 10 260 478
- GB-A- 2 343 371

## Beschreibung

### Stand der Technik

Im Möbelbereich sind Möbel mit bewegbaren Möbelteilen wie zum Beispiel Schubladen bekannt, die grifflos bzw. ohne entsprechende Griffkontur an einer Bedienseite ausgebildet sind. Derartige Möbelteile können mittels einer am Möbel vorgesehenen mechanischen Öffnungsvorrichtung z.B. mit einer so genannten Touch-Latch-Funktionalität im geschlossenen Zustand durch Einwirken bzw. Drücken auf eine Möbelteilfrontseite geöffnet werden. Ferner lassen sich bewegbare Möbelteile motorisch bzw. elektrisch bewegen, wobei der Antrieb z.B. vollelektronisch oder halbelektronisch erfolgen kann. Der jeweilige Antrieb weist neben einem Motor in der Regel Sensormittel auf, die eine Bewegung des Möbelteils erfassen und eine entsprechende Information bereitstellen, die von einer Kontrolleinrichtung, beispielsweise von einer Steuerung, welche den Antrieb kontrolliert, verarbeitet wird.

Bei der Konzeption der vorgenannten Systeme sind sicherheitsrelevante bzw. unerwünschte Betriebssituationen entsprechend zu berücksichtigen. Ein Hauptaugenmerk ist dabei auf die Minimierung eines möglichen Verletzungspotentials für eine Person gerichtet.

Das Dokument WO 2005/079630 A1 betrifft ein Möbel mit wenigstens einem bewegbaren Möbelteil, insbesondere mit einer Schublade oder dergleichen, mit wenigstens einer Antriebseinheit zum Bewegen des bewegbaren Möbelteils, einer Steuer- bzw. Regeleinrichtung zum Steuern- bzw. Regeln der Antriebseinheit und einer Sensorvorrichtung zum Erfassen von Bewegungen eines außerhalb des Möbels befindlichen Objekts, deren Signale wenigstens der Steuer- bzw. Regeleinrichtung zuführbar sind. Dabei weist die Steuer- bzw. Regeleinrichtung einen Betriebsmodus zum Antreiben des bewegbaren Möbelteils auf, in welchem das bewegbare Möbelteil zumindest einer Bewegungskomponente des von der Sensorvorrichtung erfassten Objektes folgt und zur Vermeidung von Kollisionen die Antriebseinheit das bewegbare Möbelteil in annähernd gleichem Abstand zum Objekt führt, wobei die Steuer-bzw. Regeleinrichtung den Abstand konstant zu halten versucht.

### Aufgabe und Vorteile der Erfindung

Aufgabe der vorliegenden Erfindung ist es, Systeme der vorgenannten Art im Hinblick auf ein kontrolliertes Betriebsverhalten zu verbessern.

Diese Aufgabe wird durch die unabhängigen Ansprüche 1 und 9 gelöst.

Die abhängigen Ansprüche zeigen vorteilhafte Weiterbildungen der Erfindung auf.

Die Erfindung geht zunächst aus von einer Vorrichtung zur Betriebskontrolle eines an einem Korpus bewegbar aufgenommenen Möbelteils, das mittels einer Antriebseinheit antreibbar ist, wobei die Antriebseinheit über eine Kontrolleinrichtung kontrollierbar ist, die mit Sensormitteln zur Bereitstellung von Sensordaten für die Kontrolleinheit zusammenwirkt, wobei ein Antreiben des Möbelteils über die Antriebseinheit durch eine Auslöseaktion einer Bedienperson in Bezug auf eine Frontseite des Möbelteils auslösbar ist.

Der Kern der Erfindung liegt darin, dass die Sensormittel einen Überwachungssensor umfassen, welcher ausgebildet ist, für einen vorgebbaren Raum in einem Nahbereich außerhalb des Möbels das Vorhandensein eines vom Überwachungssensor erfassbaren Gegenstandes zu erkennen und Sensordaten für die Kontrolleinheit bereitzustellen, so dass abhängig von den vom Uberwachungssensor bereitgestellten Sensordaten das Antreiben des Möbelteils über die Antriebseinheit blockierbar ist. Somit lassen sich unerwünschte Betriebs- bzw. Antriebszustände des Möbelteils ausschließen.

Insbesondere kann vermieden werden, dass beispielsweise durch ein versehentliches Gegendrücken auf oder Anlehnen einer Person an einer Frontseite eines über eine Antriebseinheit angetrieben bewegbaren Möbelteils zu einem unerwünschten Antriebsbewegung des Möbelteils führt. Hierzu wird mittels des Überwachungssensors unterschieden, ob es sich dabei um eine Auslöseaktion, also ein willentliches Einwirken zum Auslösen des Öffnungsvorgangs handelt, oder ob anderweitig auf die Frontseite des Möbelteils eingewirkt wird. Dabei macht sich die Erfindung die Erkenntnis zunutze, dass eine Person bei einer Auslösaktion, also in dem Moment, in welchem die Person auf die Frontseite einwirkt, in Erwartung des unmittelbar anschließenden angetriebenen Herausbewegens des Möbelteils, darauf achtet, dass im betreffenden Nahbereich, der vom Möbelteil dabei eingenommen wird, sich kein Hindernis befindet. Die Person wird sich daher in jedem Fall nicht in diesem Bereich bzw. vorgebbaren Raum aufhalten bzw. dort stehen, sondern versetzt dazu, entweder etwas weiter nach hinten entfernt vom Korpus oder seitlich davon.

Umgekehrt wird klar, dass in den Fällen, in denen ein vom Überwachungssensor erfassbarer Gegenstand z.B. eine Person im vorgebbaren Raum detektiert wird, wenn zu diesem Zeitpunkt auf die Möbelteilfrontseite gedrückt wird, davon ausgegangen werden kann, dass es sich dann nicht um eine Auslöseaktion bzw. um kein gewolltes Auslösen des Öffnungsvorgangs handelt, also kein Öffnen des Möbelteils stattfinden soll. Daher wird in solchen Fällen mit den bereitgestellten Sensordaten das Antreiben mit der Antriebseinheit blockiert. Unter dieser Voraussetzung kann mit der Überwachung des entsprechend vorgegebenen Raums im Nahbereich außerhalb des Möbelteils durch den Überwachungssensor indirekt die Unterscheidung zwischen einem willentlichen Einwirken zum Öffnen des Möbelteils und anderen Einwirksituationen erfolgen.

Auch bei solchen Szenarien, bei denen ein sensorerfassbarer Gegenstand und/oder z.B. ein Kleinkind sich im vorgebbaren Raum befindet, und die Person, welche auf die Frontseite einwirkt, um das Möbelteil zu öffnen, sich der zu erwartenden Kollision des sich angetrieben öffnenden Möbelteils mit dem Gegenstand oder der anderen Person nicht bewusst wird, kann erfindungsgemäß ein unerwünschter Betriebszustand verhindert werden. So kann insbesondere eine andernfalls wahrscheinliche Verletzung z.B. des erwähnten Kleinkindes bzw. eine Beschädigung am bewegbaren Möbelteil und/oder dem genannten Gegenstand vermieden werden.

Wird vom Überwachungssensor kein Gegenstand in dem zu überwachenden Bereich detektiert, wird davon ausgegangen, dass bei einem gleichzeitigen Einwirken auf die Möbelteilfrontseite eine Antriebswirkung gewünscht ist, so dass dann über die dazugehörigen Sensordaten kein Grund für die Blockierung vorliegt und daher ein Antreiben des Möbelteils auch nicht blockiert wird, sondern angetrieben bewegt wird. Der Überwachungssensor ist daher immer bzw. dauerhaft in Betrieb und in Funktion, muss also nicht eigens aktiviert oder deaktiviert werden, was bedienerfreundlich ist.

Vorteilhafterweise ist der Überwachungssensor derart ausgestaltet, einen Raum in einem Nahbereich vor einer Bedienseite des Möbels zu überwachen. Denn in der Regel bewegt sich das Möbelteil angetrieben in diesen Bereich hinein, wenn es angetrieben geöffnet wird, so dass eine Person von der Bedienseite auf das geöffnete Möbelteil zugreifen kann. Der Bereich vor der Bedienseite ist daher der mögliche Kollisionsraum, der in der Konsequenz daraus vorteilhafterweise zu überwachen ist.

Grundsätzlich kann der überwachte Raum, zusätzlich oder alternativ zu dem Raum in einem Nahbereich vor einer Bedienseite des Möbels, auch in einem Nahbereich liegen, der sich ganz oder teilweise außerhalb des Bereichs vor einer Bedienseite des Möbels befindet. Auch denkbar ist es, dass zwei oder mehr Überwachungssensoren vorgesehen sind, die gemeinsam einen oder die jeweils unterschiedlich zugeordneten vorgebbaren Räume im Nahbereich außerhalb des Möbels überwachen.

Bevorzugt ist der Überwachungssensor ausgebildet, einen Raum vor einer Aufstellfläche, auf welcher das Möbelteil positionierbar ist, zu überwachen. Die Aufstellfläche kann insbesondere ein Gebäudeboden sein, auf dem das Möbelteil aufgestellt ist. Der überwachte Raum vor der Aufstellfläche erstreckt sich in der Regel bis etwas über die Ebene hinaus, die eine Bodenfläche vor der Aufstellfläche bildet. Dieser Bereich ist daher mit hoher Wahrscheinlichkeit der Raum im Nahbereich des Möbelteils, in dem sich ein detektierter Gegenstand bzw. eine Person in einem Raum befindet, in dem eine Kollision mit dem sich öffnenden Möbelteil erfolgen würde. Sinnvollerweise geht der überwachte Raum nicht oder zumindest nicht wesentlich über die Grenzen des Raums hinaus, der vom vollständig geöffneten Möbelteil eingenommen wird. Das Volumen des überwachten vorgebbaren Raums kann insbesondere nur einen Teil des gesamten Raums ausmachen, der vom vollständig geöffneten Möbelteil eingenommen wird.

In einer vorteilhaften Modifikation des Erfindungsgegenstandes sind die Sensormittel ausgestaltet, den vom Überwachungssensor überwachbaren Raum veränderbar einzustellen. Die Einstellung erfolgt insbesondere mittels einer den Sensormitteln zugeordneten Einheit, z.B. einer Rechnereinheit bzw. der Kontrolleinheit. Damit kann die Betriebskontrolle des Möbelteils variabel bzw. flexibel eingestellt bzw. an unterschiedliche Vorgaben angepasst werden, zum Beispiel für angetrieben, sich unterschiedlich weit öffnende Möbelteile. Dies kann bei verschieden langen Schubladen, die entsprechend unterschiedlich weit aus dem Korpus herausfahren vorteilhaft sein.

Außerdem wird vorgeschlagen, dass der Überwachungssensor ausgebildet ist, um den von dem Überwachungssensor überwachbaren Bereich vorzugeben. Dabei ist insbesondere der Überwachungssensor selbst verstellbar, z.B. in seiner Anbringposition und/oder seiner Ausrichtung. Insbesondere kann der Überwachungssensor relativ zu weinigstens einer Raumachse schwenkbar und/oder entlang dieser verschiebbar sein. Erfindungsgemäß ist der Überwachungssensor zur Anordnung an einem bodennahen Abschnitt des Möbels ausgelegt. Der Überwachungssensor kann somit unauffällig positioniert werden. Außerdem ist der zu überwachende Bereich in der Regel selbst bodennah insbesondere nimmt er einen Raum oberhalb der Bodenfläche für das betreffende Möbel ein.

Weiter ist es bevorzugt, dass der Überwachungssensor für mehrere Möbelteile vorgesehen ist, so dass abhängig von den vom Überwachungssensor bereitgestellten Sensordaten das jeweilige Antreiben der mehreren Möbelteile über die mindestens eine Antriebseinheit durch die Auslösaktion der Bedienperson in Bezug auf die Frontseite des Möbelteils nicht auslösbar ist. Zum Antreiben der mehreren Möbelteile kann genau eine Antriebseinheit oder es können mehrere Antriebseinheiten vorgesehen werden. Dies ist im Hinblick auf mehrere übereinander liegende Möbelteile in einem Möbelkorpus vorteilhaft, zum Beispiel bei mehreren übereinender liegenden Schubladen in einem Korpus. Mit dem einen Überwachungssensor lässt sich so der Betrieb der mehreren Möbelteile kontrollieren, da für alle diese Möbelteile der gleiche vorgebbare Raum im Nahbereich außerhalb des Möbels bzw. des gemeinsamen Korpus im Hinblick auf eine mögliche Kollision relevant ist, wie dies oben erläutert ist.

Außerdem ist es vorteilhaft, dass der Überwachungssensor ausgebildet ist, einen unbewegten und/oder einen sich bewegenden Gegenstand zu erkennen und entsprechende Sensordaten für die Kontrolleinheit bereitzustellen. So kann der Überwachungssensor für statische oder dynamische Gegenstände eingesetzt werden. Der Sensor kann damit Vorrichtungen genauso erfassen wie Personen oder z.B. Haustiere.

Ein weiterer wesentlicher Aspekt der Erfindung geht von einem Möbel mit einem bewegbaren in einem Korpus aufgenommenen Möbelteil aus, das mittels einer Antriebseinheit antreibbar ist, wobei die Antriebseinheit über eine Kontrolleinrichtung kontrollierbar ist, die mit Sensormitteln zur Bereitstellung von Sensordaten für die Kontrolleinheit zusammenwirkt, wobei eine Antriebsbewegung des Möbelteils durch eine Auslöseaktion einer Bedienperson in Bezug auf eine Frontseite des Möbelteils auslösbar ist. Gemäß der Erfindung ist eine der zuvor genannten Vorrichtungen vorhanden. Damit lassen sich an dem Möbel die dementsprechenden Vorteile erzielen.

Der Betrieb für das Möbelteil bzw. für dessen angetriebenes Öffnen wird dann gemäß der Steuerung so programmiert, dass für den Fall, dass der Überwachungssensor bzw. der Sensor für den Anlehnschutz keinen Gegenstand im vorgebbaren Raum detektiert, sich also kein Benutzer bzw. anderer Gegenstand in dem vorgegebenen Raum befindet, ein Benutzer durch Druck auf die Front des Möbelteils das angetriebene Öffnen auslösen kann. Diese beiden Vorgaben bzw. die daraus resultierenden Signale werden als "MUSS"-Bedingungen" programmiert, um ein angetriebenes Öffnen zu ermöglichen.

Bei mehreren Möbelkorpussen wird in der Regel jedem Korpus ein eigener Überwachungssensor zugeordnet.

Außerdem ist es vorteilhaft, dass der Überwachungssensor an Sockelmitteln des Möbels positioniert ist, wobei die Sockelmittel zur Aufstellung des Möbels auf einer Aufstellfläche dienen.

Der Überwachungssensor ist erfindungsgemäß unterhalb des bewegbar aufgenommenen Möbelteils vorhanden. Ein Gegenstand vor dem Möbelteil wird damit sicher erkannt.

Bevorzugt ist bei einem Korpus mit mehreren übereinander positionierten bewegbar aufgenommenen Möbelteilen ein Überwachungssensor unterhalb des untersten Möbelteils vorhanden. So kann mit genau einem Überwachungssensor eine Mehrzahl von Möbelteilen kontrolliert werden.

Der Überwachungssensor ist vorteilhaft derart vorhanden, den von dem Überwachungssensor überwachbaren Bereich veränderbar festzulegen. Damit kann der vorgebbare Raum jederzeit angepasst bzw. für eine optimierte Betriebskontrolle nachgestellt werden.

### Figurenbeschreibung

Weitere Merkmale und Vorteile der Erfindung sind anhand von zwei stark schematisierten Ausführungsbeispielen näher erläutert.
- Figur 1: zeigt eine stark schematisierte Seitenansicht auf den unteren Teil eines erfindungsgemäßen Möbelteils und
- Figur 2: eine Ansicht gemäß Figur 1 eines alternativen erfindungsgemäßen Möbelteils.

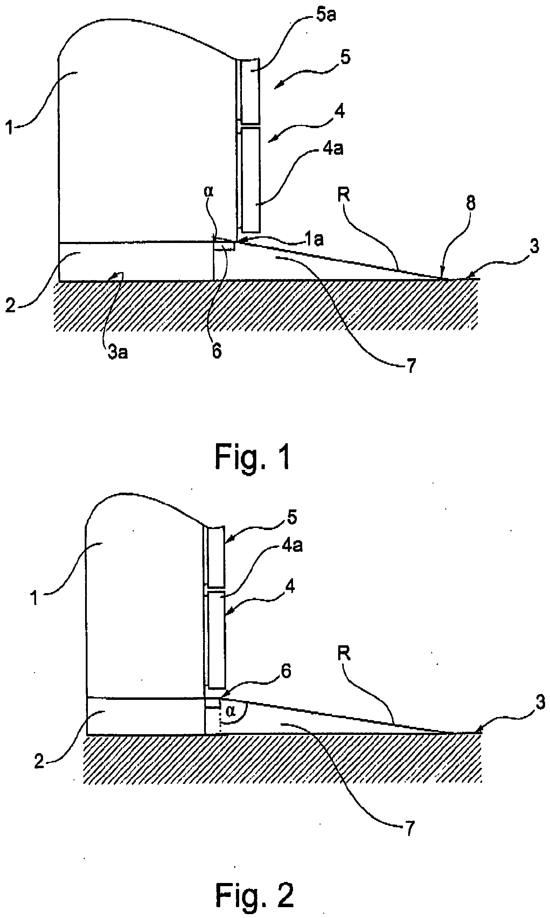

In den Figuren 1 und 2 sind sich entsprechende Teile der beiden Ausführungsbeispiele mit den gleichen Bezugszeichen versehen.

Figur 1 zeigt von der Seite einen unteren Teil eines erfindungsgemäßen Möbels mit einem Korpus 1, welcher über einen unten am Korpus 1 vorhandenen Sockel 2 auf einer Aufstellfläche 3a einer Bodenfläche 3 aufgestellt ist. Im Korpus 1 ist eine unterste Schublade 4 antreibbar aufgenommen, wobei oberhalb der Schublade 4 zumindest eine weitere Schublade 5 vorgesehen ist. Nicht sichtbar sind Führungsschienen, an denen die Schubladen 4, 5 verschieblich im Korpus 1 aufgenommen sind und ein Antriebsystem samt Kontrolleinheit für eine angetriebene Bewegung der Schubladen mittels eines Motors. Die Schubladen 4, 5 können angetrieben aus der im Korpus eingefahrenen Position gemäß Figur 1 und 2 in eine Öffnungsstellung (nicht gezeigt) bewegt werden.

Von den Schubladen 4, 5 ist jeweils lediglich ein Frontelement 4a bzw. 5a ersichtlich, das vorderseitig bzw. auf einer Bedienseite vorne am Korpus 1 übersteht. Der Korpus 1 ist von der Seite betrachtet absatzartig vorstehend zum unten anschließenden Sockel 2 ausgebildet. In diesem Bereich ist an einer Unterseite eines horizontal ausgerichteten Korpusbodens la ein Überwachungssensor 6 vorgesehen. Der Sensor 6 dient zur Überwachung eines vorgebbaren Raums 7 im Nahbereich vor der Bedienseite des Korpus 1, wobei eine obere Grenze des überwachten Raums durch die vom Korpus 1 abfallend verlaufende Linie R angedeutet ist. Der vom Überwachungssensor 6 überwachte Raum 7 erstreckt sich bis demgemäß von der Bodenfläche 3 am Sockel 2 nach oben bis zum Korpusboden 1a und von dort schräg abfallend bis zu einem Grenzbereich 8 auf der Bodenfläche 3 entfernt vor dem Sockel 2. Seitlich erstreckt sich der Raum 7 bis etwas über die Breite der Schublade 4 hinaus, was aus den Seitenansichten gemäß Figur 1 und 2 nicht ersichtlich wird. Die Erstreckung bzw. Größe des Bereichs des überwachten Raums 7 ist über den insbesondere veränderbaren bzw. einstellbaren Winkel α vorgebbar. Der Winkel α bildet sich zwischen einer Raumsenkrechten bzw. entlang einer Vorderseite des Sockels 2 und der schräg abfallend verlaufenden Linie R und beträgt im gezeigten Fall etwa 80 Winkelgrade. Der Grenzbereich 8 kann beispielsweise in einem Bereich von ca. 0,2 Meter bis ein Meter vor dem Korpus 1 liegen.

Wird ein vom Überwachungssensor 6 erfassbarer Gegenstand, der also eine gewisse bzw. für eine problematische Kollision relevante Mindestgröße aufweisen muss, im Raum 7 erfasst, wird über eine Kontrolleinheit (nicht dargestellt), die mit dem Überwachungssensor 6 zusammenwirkt und die den Betrieb des Antriebs kontrolliert, ein Antreiben der Schubladen 4 und 5 aus der geschlossenen bzw. im Korpus 1 eingefahrenen Position unterbunden bzw. blockiert.

Figur 2 zeigt eine alternative Anordnung, bei welcher im Unterschied zur Anordnung aus Figur 1 eine Vorderseite des Korpus 1 bündig mit einer Vorderseite des Sockels 2 ausgebildet ist. Der Überwachungssensor 6 ist vorstehend zur Vorderseite des Sockels 2 und des Korpus 1 positioniert, im Bereich etwas unterhalb der unteren Schublade 4 bzw. oben am Sockel 2. Der Überwachunggsensor 6 ist jedoch vorteilhafterweise mit seinem vorderen Ende etwas nach hinten versetzt bzw. zurückversetzt zur Vorderseite des Frontelements 4a der Schublade 4.

### Bezugszeichenliste:

- 1: Korpus
- 1a: Korpusboden
- 2: Sockel
- 3: Bodenfläche
- 3a: Aufstellfläche
- 4: Schublade
- 4a: Frontelement
- 5: Schublade
- 5a: Frontelement
- 6: Sensor
- 7: Raum
- 8: Grenzbereich

## Patentansprüche

1. Vorrichtung zur Betriebskontrolle eines an einem Korpus (1) bewegbar aufgenommenen Möbelteils (4, 5), das mittels einer Antriebseinheit antreibbar ist, wobei die Vorrichtung die Antriebseinheit, eine Kontrolleinheit und Sensormittel umfasst, und wobei die Antriebseinheit über die Kontrolleinheit kontrollierbar ist, die mit den Sensormitteln zur Bereitstellung von Sensordaten für die Kontrolleinheit zusammenwirkt, wobei ein Antreiben des Möbelteils (4, 5) über die Antriebseinheit durch eine Auslöseaktion einer Bedienperson in Bezug auf eine Frontseite des Möbelteils (4, 5) auslösbar ist, wobei die Sensormittel einen Überwachungssensor (6) umfassen, welcher ausgebildet ist, für einen vorgebbaren Raum in einem Nahbereich außerhalb des Möbels das Vorhandensein eines vom Überwachungssensor (6) erfassbaren Gegenstandes zu erkennen und Sensordaten für die Kontrolleinheit bereitzustellen, so dass abhängig von den vom Überwachungssensor bereitgestellten Sensordaten das Antreiben des Möbelteils (4, 5) über die Antriebseinheit blockierbar ist, wobei eine Unterscheidung zwischen einer willentlichen Auslöseaktion zum Bewegen des Möbelteils (4, 5) und anderen Einwirksituationen erfolgt und wobei die Antriebseinheit blockiert, wenn bei einer Auslöseaktion in einem betreffenden Nahbereich des bewegbaren Möbelteils (4, 5) sich ein Hindernis befindet,
**dadurch gekennzeichnet, dass**
der Überwachungssensor zur Anordnung unterhalb eines untersten bewegbar aufgenommenen Möbelteils (4) am Möbel ausgelegt ist.

2. Vorrichtung nach Anspruch 1, **dadurch gekennzeichnet, dass** der Überwachungssensor (6) derart ausgestaltet ist, einen Raum in einem Nahbereich vor einer Bedienseite des Möbels zu überwachen.

3. Vorrichtung nach Anspruch 1 oder 2, **dadurch gekennzeichnet, dass** der Überwachungssensor (6) ausgebildet ist, einen Raum vor einer Aufstellfläche (3a), auf welcher das Möbelteil (4, 5) positionierbar ist, zu überwachen.

4. Vorrichtung nach einem der vorhergehenden Ansprüche, **dadurch gekennzeichnet, dass** die Sensormittel ausgestaltet sind, den vom Überwachungssensor (6) überwachbaren Raum veränderbar einzustellen.

5. Vorrichtung nach einem der vorhergehenden Ansprüche, **dadurch gekennzeichnet, dass** der Überwachungssensor (6) ausgebildet ist, um den von dem Überwachungssensor (6) überwachbaren Bereich vorzugeben.

6. Vorrichtung nach einem der vorhergehenden Ansprüche, **dadurch gekennzeichnet, dass** der Überwachungssensor (6) zur Anordnung an einem bodennahen Abschnitt des Möbels ausgelegt ist.

7. Vorrichtung nach einem der vorhergehenden Ansprüche, **dadurch gekennzeichnet, dass** der Überwachungssensor (6) für mehrere Möbelteile (4, 5) vorgesehen ist, so dass abhängig von den vom Überwachungssensor (6) bereitgestellten Sensordaten das jeweilige Antreiben der mehreren Möbelteile (4, 5) über die mindestens eine Antriebseinheit durch die Auslöseaktion der Bedienperson in Bezug auf die Frontseite des Möbelteils (4, 5) nicht auslösbar ist.

8. Vorrichtung nach einem der vorhergehenden Ansprüche, **dadurch gekennzeichnet, dass** der Überwachungssensor (6) ausgebildet ist, einen unbewegten und/oder einen sich bewegenden Gegenstand zu erkennen und entsprechende Sensordaten für die Kontrolleinheit bereitzustellen.

9. Möbel mit einem bewegbar an einem Korpus (1) aufgenommenen Möbelteil (4, 5), das mittels einer Antriebseinheit antreibbar ist, wobei die Antriebseinheit über eine Kontrolleinheit kontrollierbar ist, die mit Sensormitteln zur Bereitstellung von Sensordaten für die Kontrolleinheit zusammenwirkt, wobei eine Antriebsbewegung des Möbelteils (4, 5) durch eine Auslöseaktion einer Bedienperson in Bezug auf eine Frontseite des Möbelteils (4, 5) auslösbar ist, **dadurch gekennzeichnet, dass** eine Vorrichtung nach einem der vorhergehenden Ansprüche vorhanden ist.

10. Möbel nach Anspruch 9, **dadurch gekennzeichnet, dass** der Überwachungssensor (6) an Sockelmitteln (2) des Möbels positioniert ist, wobei die Sockelmittel (2) zur Aufstellung des Möbels auf einer Aufstellfläche (3a) dienen.

11. Möbel nach einem der vorhergehenden Ansprüche 9 bis 10, **dadurch gekennzeichnet, dass** bei einem Korpus (1) mit mehreren übereinander positionierten bewegbar aufgenommenen Möbelteilen (4, 5), ein Überwachungssensor (6) unterhalb des untersten Möbelteils (4) vorhanden ist.

12. Möbel nach einem der vorhergehenden Ansprüche 9 bis 11, **dadurch gekennzeichnet, dass** der Überwachungssensor (6) derart vorhanden ist, den von dem Überwachungssensor (6) überwachbaren Bereich veränderbar festzulegen.

## Claims

1. Device for controlling a furniture part (4, 5) mounted movably on a body (1) which furniture part can be driven by means of a drive unit, wherein the device comprises the drive unit, a control unit and sensor means, wherein the drive unit can be controlled by the control unit, which works together with the sensor means to provide sensor data for the control unit, wherein the drive of the furniture part (4, 5) by the drive unit can be triggered by a triggering action of an operator in relation to a front side of the furniture part (4, 5), wherein the sensor means comprise a monitoring sensor (6) which is designed to identify for a predefinable space in a close area outside the furniture the presence of an object detectable by the monitoring sensor (6) and to provide sensor data for the control unit, so that depending on the sensor data provided by the monitoring sensor the drive of the furniture part (4, 5) can be blocked by the drive unit, wherein a distinction is made between a deliberate triggering action for moving the furniture part (4, 5) and other operating situations and wherein the drive unit locks if during a triggering action in a relevant close area of the movable furniture art (4, 5) there is an obstacle, **characterised in that** the monitoring sensor is configured for arrangement below the bottom-most movably mounted furniture part (4) on the furniture.

2. Device according to claim 1, **characterised in that** the monitoring sensor (6) is configured to monitor a space in a close area in front of an operating side of the furniture.

3. Device according to claim 1 or 2, **characterised in that** the monitoring sensor (6) is designed to monitor a space in front of an installation surface (3a), on which the furniture part (4, 5) can be positioned.

4. Device according to any one of the preceding claims, **characterised in that** the sensor means are configured to vary the space to be monitored by the monitoring sensor (6).

5. Device according to any one of the preceding claims, **characterised in that** the monitoring sensor (6) is designed to specify the area to be monitored by the monitoring sensor (6).

6. Device according to any one of the preceding claims, **characterised in that** the monitoring sensor (6) is set up for arrangement on a section of the furniture close to the floor.

7. Device according to any one of the preceding claims, **characterised in that** the monitoring sensor (6) is provided for a plurality of furniture parts (4, 5), so that depending on the sensor data provided by the monitoring sensor (6) the respective drive of the plurality of furniture parts (4, 5) cannot be triggered by the at least one drive unit by means of the triggering action of the operator in relation to the front side of the furniture part (4, 5).

8. Device according to any one of the preceding claims, **characterised in that** the monitoring sensor (6) is designed to recognise an unmoved and/or a moving object and provide corresponding sensor data for the control unit.

9. Furniture with a furniture part (4, 5) mounted movably on a body (1), which furniture part can be driven by means of a drive unit, wherein the drive unit can be controlled by a control unit which works together with sensor means for providing sensor data for the control unit, wherein a drive movement of the furniture part (4, 5) can be triggered by a triggering action of an operator in relation to a front side of the furniture part (4, 5), **characterised in that** a device according to any one of the preceding claims is provided.

10. Furniture according to claim 9, **characterised in that** the monitoring sensor (6) is positioned on base means (2) of the furniture, wherein the base means (2) are used for installing the furniture on an installation surface (3a).

11. Furniture according to any one of the preceding claims 9 to 10, **characterised in that** in a body (1) with a plurality of furniture parts (4, 5) mounted to be positioned movably above one another, a monitoring sensor (6) is provided underneath the bottom furniture part (4).

12. Furniture according to any one of the preceding claims 9 to 11, **characterised in that** the monitoring sensor (6) is provided for variably determining the area to be monitored by the monitoring sensor (6).

## Revendications

1. Dispositif pour contrôler le fonctionnement d'une pièce de meuble (4, 5) qui est reçue mobile sur un corps (1) et qui peut être entraînée au moyen d'une unité d'entraînement, le dispositif comprenant l'unité d'entraînement, une unité de contrôle et des moyens de détection, et l'unité d'entraînement pouvant être contrôlée par le biais de l'unité de contrôle, laquelle coopère avec les moyens de détection pour fournir des données de capteur à l'unité de contrôle, un entraînement de la pièce de meuble (4, 5) par l'intermédiaire de l'unité d'entraînement pouvant être déclenché par une action de déclenchement d'un utilisateur exercée sur une façade de la pièce de meuble (4, 5), les moyens de détection comprenant un capteur de surveillance (6), lequel est conçu pour détecter, pour un espace pouvant être prédéfini dans une zone proche à l'extérieur du meuble, la présence d'un objet pouvant être détecté par le capteur de surveillance (6) et pour fournir des données de capteur à l'unité de contrôle de sorte qu'en fonction des données de capteur fournies par le capteur de surveillance, l'entraînement de la pièce de meuble (4, 5) par l'intermédiaire de l'unité d'entraînement peut être bloqué, une distinction étant faite entre une action de déclenchement délibérée en vue de déplacer la pièce de meuble (4, 5) et d'autres situations dans lesquelles une action est exercée, et l'unité d'entraînement se bloquant lorsque, dans le cas d'une action de déclenchement, un obstacle se situe dans une zone proche concernée de la pièce de meuble (4, 5) mobile, **caractérisé en ce que** le capteur de surveillance est conçu pour être disposé en dessous d'une pièce de meuble (4, 5) reçue mobile la plus basse.

2. Dispositif selon la revendication 1, **caractérisé en ce que** le capteur de surveillance (6) est conçu pour surveiller un espace dans une zone proche située devant un côté d'utilisation du meuble.

3. Dispositif selon la revendication 1 ou 2, **caractérisé en ce que** le capteur de surveillance (6) est conçu pour surveiller un espace situé devant une surface de pose (3a) sur laquelle la pièce de meuble (4, 5) peut être positionnée.

4. Dispositif selon l'une des revendications précédentes, **caractérisé en ce que** les moyens de détection sont conçus pour régler de façon modifiable l'espace pouvant être surveillé par le capteur de surveillance (6).

5. Dispositif selon l'une des revendications précédentes, **caractérisé en ce que** le capteur de surveillance (6) est conçu pour prédéfinir la zone pouvant être surveillée par le capteur de surveillance (6).

6. Dispositif selon l'une des revendications précédentes, **caractérisé en ce que** le capteur de surveillance (6) est adapté pour être disposé sur une partie, proche du sol, du meuble.

7. Dispositif selon l'une des revendications précédentes, **caractérisé en ce que** le capteur de surveillance (6) est prévu pour plusieurs pièces de meuble (4, 5), de sorte qu'en fonction des données de capteur fournies par le capteur de surveillance (6), l'entraînement respectif des différentes pièces de meuble (4, 5) par l'intermédiaire de l'au moins une unité d'entraînement ne peut pas être déclenché par l'action de déclenchement de l'utilisateur exercée sur la façade de la pièce de meuble (4, 5).

8. Dispositif selon l'une des revendications précédentes, **caractérisé en ce que** le capteur de surveillance (6) est conçu pour détecter un objet immobile et/ou un objet en mouvement, et pour fournir à l'unité de contrôle des données de capteur correspondantes.

9. Meuble comprenant une pièce de meuble (4, 5) qui est reçue mobile sur un corps (1) et qui peut être entraînée au moyen d'une unité d'entraînement, l'unité d'entraînement pouvant être contrôlée par le biais d'une unité de contrôle, laquelle coopère avec des moyens de détection permettant de fournir des données de capteur à l'unité de contrôle, un mouvement d'entraînement de la pièce de meuble (4, 5) pouvant être déclenché par une action de déclenchement d'un utilisateur exercée sur une façade de la pièce de meuble (4, 5), **caractérisé en ce qu'**un dispositif selon l'une des revendications précédentes est présent.

10. Meuble selon la revendication 9, **caractérisé en ce que** le capteur de surveillance (6) est positionné sur des moyens formant socle (2) du meuble, les moyens formant socle (2) servant à poser le meuble sur une surface de pose (3a).

11. Meuble selon l'une des revendications précédentes 9 à 10, **caractérisé en ce que**, dans le cas d'un corps (1) comprenant plusieurs pièces de meuble (4, 5) reçues mobiles et positionnées les unes au-dessus des autres, un capteur de surveillance (6) est présent au-dessous de la pièce de meuble (4) la plus basse.

12. Meuble selon l'une des revendications précédentes 9 à 11, **caractérisé en ce que** le capteur de surveillance (6) est présent de manière à définir de façon modifiable la zone pouvant être surveillée par le capteur de surveillance (6).
